# EUROPÄISCHE PATENTSCHRIFT

(11) **EP 2 028 385 B1**
(45) Veröffentlichungstag und Bekanntmachung des Hinweises auf die Patenterteilung: **28.03.2012**
(21) Anmeldenummer: 08012665.9
(22) Anmeldetag: 14.07.2008
(51) Int. Cl.: F16D 13/75

(54) **Kupplungsaggregat**
Coupling device
Embrayage

(30) Priorität: 20.08.2007 DE 102007039299
(43) Veröffentlichungstag der Anmeldung: 25.02.2009
(73) Patentinhaber: Schaeffler Technologies AG & Co. KG, 91074 Herzogenaurach (DE)
(72) Erfinder: Krebs, Florian, 76530 Baden-Baden (DE)

(56) Entgegenhaltungen:
- DE-A1- 10 048 555
- DE-A1- 19 743 782
- US-A1- 2002 074 203

## Beschreibung

Die Erfindung betrifft ein Kupplungsaggregat mit wenigstens einer Reibungskupplung, die eine Verschleißnachstelleinrichtung mit einer ersten Rampeneinrichtung umfasst, die mit einer zweiten Rampeneinrichtung zusammenwirkt, die durch mindestens eine Federeinrichtung mit der ersten Rampeneinrichtung verspannt ist. Ein solches Kupplungsaggregat ist aus DE 10048555 bekannt.

Derartige Kupplungsaggregate sind durch den im Zusammenhang mit der Figurenbeschreibung angeführten Stand der Technik bekannt geworden.

Aufgabe der Erfindung ist es, ein Kupplungsaggregat gemäß dem Oberbegriff des Anspruchs 1, insbesondere im Hinblick auf den Bauraum für die Federeinrichtung, zu optimieren.

Die Aufgabe ist bei einem Kupplungsaggregat mit wenigstens einer Reibungskupplung, die eine Verschleißnachstelleinrichtung mit einer ersten Rampeneinrichtung umfasst, die mit einer zweiten Rampeneinrichtung zusammenwirkt, die durch mindestens eine Federeinrichtung, insbesondere eine Zugfedereinrichtung, mit der ersten Rampeneinrichtung verspannt ist, dadurch gelöst, dass die Federeinrichtung mindestens zwei in Reihe geschaltete Federkörper, insbesondere Zugfederkörper, umfasst. Die Federeinrichtung kann zum Beispiel im Innenbereich des Kupplungsaggregats angeo14rdnet werden. Allerdings ist der dort zur Verfügung stehende Bauraum knapp bemessen. Durch die erfindungsgemäße Gestaltung der Federeinrichtung kann der zur Verfügung stehende Bauraum besser genutzt werden, ohne eine tangentiale Krafteinleitung der Federkraft in die Rampeneinrichtungen zu beeinträchtigen. Vorzugsweise sind mehrere Federeinrichtungen insbesondere gleichmäßig über den Umfang der Rampeneinrichtungen verteilt.

Ein bevorzugtes Ausführungsbeispiel des Kupplungsaggregats ist dadurch gekennzeichnet, dass die Federkörper jeweils im Bereich eines Rampentals der ersten Rampeneinrichtung angeordnet sind. Bei der ersten Rampeneinrichtung handelt es sich vorzugsweise um ein Gehäuseteil, in das beziehungsweise aus dem Rampen mit Rampenbergen und Rampentälern eingeprägt beziehungsweise herausgeprägt sind.

Ein weiteres bevorzugtes Ausführungsbeispiel des Kupplungsaggregats ist dadurch gekennzeichnet, dass die Federkörper jeweils im Bereich eines Rampenbergs der zweiten Rampeneinrichtung angeordnet sind. Bei der zweiten Rampeneinrichtung handelt es sich vorzugsweise um einen Rampenring, der Rampen mit Rampenbergen und Rampentälern aufweist, die mit den Rampenbergen und Rampentälern der ersten Rampeneinrichtung zusammenwirken.

Ein weiteres bevorzugtes Ausführungsbeispiel des Kupplungsaggregats ist dadurch gekennzeichnet, dass zwischen zwei Federkörpern einer Federeinrichtung jeweils ein Rampenberg der ersten Rampeneinrichtung angeordnet ist. Vorzugsweise sind die Gestalt und Größe der Federkörper an die Gestalt und Größe der Rampenberge und Rampentäler der beiden Rampeneinrichtungen angepasst.

Erfindungsgemäß ist das Kupplungsaggregat dadurch gekennzeichnet, dass die beiden Federkörper durch einen Verbindungsdraht einstückig miteinander verbunden sind. Vorzugsweise erstreckt sich der Verbindungsdraht radial außen an der zweiten Rampeneinrichtung entlang.

Ein weiteres bevorzugtes Ausführungsbeispiel des Kupplungsaggregats ist dadurch gekennzeichnet, dass die beiden Federkörper eine ungleiche Anzahl von Federwindungen aufweisen. Demzufolge haben die beiden Federkörper unterschiedliche Federraten, was zu einer optimalen Bauraumausnutzung der Rampengeometrie der Rampeneinrichtungen durch die Federeinrichtung genutzt werden kann.

Ein weiteres bevorzugtes Ausführungsbeispiel des Kupplungsaggregats ist dadurch gekennzeichnet, dass einer der Federkörper mit einem freien Ende in der ersten Rampeneinrichtung oder in ein Klemmfederelement eingehängt ist, das an der ersten Rampeneinrichtung befestigt ist. Vorzugsweise ist ein umgebogenes Ende des Federkörpers in ein Loch in der Rampeneinrichtung oder in dem Klemmfederelement eingesteckt.

Ein weiteres bevorzugtes Ausführungsbeispiel des Kupplungsaggregats ist dadurch gekennzeichnet, dass einer der Federkörper mit einem freien Ende in die zweite Rampeneinrichtung eingehängt ist. Vorzugsweise ist ein umgebogenes Ende des Federkörpers in einen Schlitz oder eine Nut in der zweiten Rampeneinrichtung eingehängt.

Ein weiteres bevorzugtes Ausführungsbeispiel des Kupplungsaggregats ist dadurch gekennzeichnet, dass die zweite Rampeneinrichtung so radial innerhalb von mehreren Federeinrichtungen angeordnet ist, dass die zweite Rampeneinrichtung durch die Federeinrichtungen zentriert wird. Dadurch werden die Herstellung und die Montage des Kupplungsaggregats vereinfacht.

Ein weiteres bevorzugtes Ausführungsbeispiel des Kupplungsaggregats ist dadurch gekennzeichnet, dass die Federkörper jeweils eine Schraubenzugfeder umfassen. Vorzugsweise haben die Federkörper den gleichen Drahtdurchmesser und den gleichen Windungsdurchmesser.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: einen Halbschnitt durch ein Kupplungsaggregat mit zwei Rampeneinrichtungen, die durch mehrere Zugfedereinrichtungen miteinander verspannt sind;
- Figur 2: eine perspektivische Darstellung der beiden Rampeneinrichtungen mit den Zugfedereinrichtungen;
- Figur 3: einen vergrößerten Ausschnitt aus Figur 2 mit einer der Zugfedereinrichtungen und
- Figur 4: eine perspektivische Darstellung der Zugfedereinrichtung aus Figur 3.

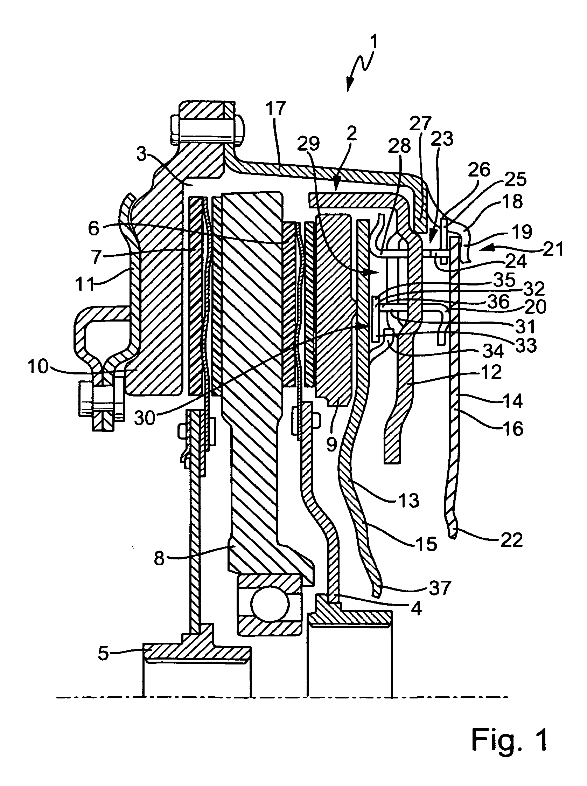

Das in Figur 1 dargestellte Kupplungsaggregat 1 umfasst zwei Reibungskupplungen 2, 3, die im ausgerückten, also geöffneten Zustand dargestellt sind.

Das Kupplungsaggregat bildet somit eine Doppelkupplung, die zwei Kupplungsscheiben 4, 5 umfasst, die mit unterschiedlichen Getriebeeingangswellen verbindbar sind, wobei das diese Wellen aufweisende Getriebe in vorteilhafter Weise ein so genanntes Lastschaltgetriebe bilden kann, welches zwei Teilgetriebe aufweisen kann.

Die Kupplungsscheiben 4, 5 tragen radial außen Reibbeläge 6, 7, die axial einspannbar sind zwischen einer den beiden Reibungskupplungen 2 und 3 gemeinsamen Gegendruckscheibe 8 und einer der jeweiligen Reibungskupplung 2 beziehungsweise 3 zugeordneten Anpressplatte 9, 10. Die Gegendruckscheibe 8 bildet ein Bestandteil eines Schwungrads, das mit einem Antriebsmotor verbunden ist. Die Gegendruckscheibe 8 ist über axial verlaufende Bereiche, die hier nicht näher dargestellt sind, mit einer Antriebsplatte beziehungsweise einem Antriebskorb 11 verbunden. Die Antriebsplatte 11 ist als Mitnehmerring ausgebildet. Die axial verlaufenden Bereiche, die eine Verbindung zwischen der Gegendruckscheibe 8 und der Antriebsplatte 11 herstellen, können entweder an der Gegendruckscheibe 8 oder an der Antriebsplatte 11 angeformt sein oder aber auch an beiden Teilen 8, 11 zumindest teilweise vorgesehen sein. Die Antriebsplatte 11 kann entweder nach Art eines Drehmomentwandlers mit einer zum Beispiel an der Kurbelwelle des Antriebsmotors vorgesehenen Antriebsplatte verschraubbar sein oder aber mit einem motorseitig angeordneten Antriebselement über eine axiale Steckverbindung verbindbar sein. Bezüglich der Ausgestaltung derartiger Steckverbindungen wird beispielsweise auf die älteren Anmeldungen PCT/DE2006/000995, PCT/De2006/001061, PCT/DE2006/001954, PCT/DE2006/001100 hingewiesen.

Die Gegendruckscheibe 8 ist über eine Lagerung 12 getriebeseitig gelagert und zumindest in einer Axialrichtung festgelegt, um die zumindest für eine der Reibungskupplungen erforderlichen Schließkräfte axial abzufangen. Bezüglich der Ausgestaltung und Anordnung einer derartigen Lagerung wird auf die ältere Anmeldung DE 10 2005 037 514 hingewiesen. Die Gegendruckscheibe 8 kann also gemäß der Lehre dieser Schrift auf einer Getriebeeingangswelle gelagert beziehungsweise axial abgestützt sein. Sie kann jedoch auch in Abwandlung dieser Lehre auf einem mit dem Getriebegehäuse fest verbundenen Abstützstutzen beziehungsweise Abstützrohr aufgenommen und axial abgestützt sein.

Die vorerwähnten Anmeldungen sind bezüglich der erwähnten konstruktiven Merkmale als in die vorliegende Anmeldung integriert zu betrachten und es wird deshalb auf eine ausführliche Beschreibung dieser Merkmale verzichtet.

Wie aus Figur 1 erkennbar ist, besitzen die Kupplungsscheiben 4 und 5 axial zwischen ihren beiden ringförmigen Reibbelägen 6 und 7 eine so genannte Belagfederung, die einen progressiven Aufbau und Abbau des von den Reibungskupplungen 2, 3 übertragbaren Drehmoments über zumindest einen Teilbereich des Betätigungsweges gewährleisten.

Die Anpressplatte 9 ist mittelbar oder unmittelbar vorzugsweise über blattfederartige Elemente mit der Gegendruckscheibe 8 drehfest, jedoch begrenzt axial verlagerbar verbunden. Die Anpressplatte 10 der Reibungskupplung 3 ist in ähnlicher Weise mit der Gegendruckscheibe 8 antriebsmäßig gekoppelt. An der Gegendruckscheibe 8 ist ein gehäuseartiges Bauteil 12 befestigt, das hier als Blechdeckel ausgebildet ist. Axial beidseits dieses Bauteils 12 sind in ringförmiger Anordnung vorgesehene Hebelelemente 13, 14 vorgesehen, mittels derer die jeweils zugeordnete Reibungskupplung 2, 3 betätigbar ist.

Die Hebelelemente 13, 14 können jeweils ein ringartiges Bauteil bilden, das tellerfederähnliche Eigenschaften aufweist, also federnd in seiner Konizität veränderbar ist. Im Folgenden werden die zu einem ringartigen Bauteil zusammengefassten Hebelelemente 13, 14 als Hebelfeder 15 beziehungsweise 16 bezeichnet. Diese Hebelfedern 15, 16 besitzen vorzugsweise jeweils eine Federeigenschaft, die gewährleistet, dass sich diese tendenzmäßig in eine kegelstumpfförmige Position aufstellen, die einem geöffneten Zustand der Reibungskupplungen 2 und 3 entspricht.

Die Anpressplatte 10 trägt Zugmittel 17, die sich axial erstrecken und an ihrem der Anpressplatte 10 abgewandten Ende 18 eine Schwenklagerung beziehungsweise Abwälzauflage 19 tragen, an der die Hebelfeder 16 kippbar beziehungsweise verschwenkbar abgestützt ist. Bei dem dargestellten Ausführungsbeispiel ist die Abwälzauflage 19 einstückig mit den Zugmitteln 17 ausgebildet und durch einen radial nach innen hin gerichteten ringförmigen Bereich gebildet.

Die Zugmittel 17 können durch einzelne über den Umfang verteilte hakenartige Bauteile gebildet sein. In vorteilhafter Weise können diese Zugmittel 17 jedoch auch zu einem vorzugsweise aus Blech hergestellten Bauteil zusammengefasst werden, welches einen vorzugsweise geschlossenen ringförmigen Bereich besitzt, von dem aus mehrere axiale Schenkel ausgehen können, die mit der Anpressplatte 10 fest verbunden sind.

Radial innerhalb der Abwälzauflage 19 ist die Hebelfeder 16 an einem ringförmigen Abstützring 20 abgestützt. Der ringförmige Abstützring 20 ist axial zwischen dem gehäuseartigen Bauteil 12 und der Hebelfeder 16 eingespannt und bildet ein Bestandteil einer Nachstelleinrichtung 21, mittels der zumindest der an den Reibbelägen 7 auftretende Verschleiß wenigstens teilweise automatisch ausgeglichen werden kann. Zum Schließen der Reibungskupplung 3 werden die radial inneren Spitzen 22 der Hebelfeder 16 in Richtung nach links beaufschlagt. Hierfür ist ein die Schließkraft zumindest im Wesentlichen in die Reibungskupplung 3 einleitendes Betätigungselement, wie zum Beispiel ein Betätigungslager vorgesehen, welches nicht näher dargestellt ist. Ein derartiges Betätigungselement bildet einen Bestandteil eines Betätigungssystems, welches als pneumatisches, hydraulisches, elektrisches oder mechanisch betätigtes Betätigungssystem ausgebildet sein kann oder aber eine Kombination der erwähnten Betätigungsmöglichkeiten aufweist, also beispielsweise als elektrohydraulisches Betätigungssystem ausgebildet ist.

Hebelelemente 13, 14 beziehungsweise Hebelfedern 15, 16 sind beispielsweise durch die DE 103 40 665 A1, die DE 199 05 373 A1, EP 0 992 700 B1 und EP 1 452 760 A1 vorgeschlagen worden.

Die die Drehmomentübertragung und die axiale Verlagerbarkeit der Anpressplatte 10 gewährleistenden Federmittel, wie insbesondere Blattfedern, die in an sich bekannter Weise die Bauteile 8 und 10 miteinander verbinden, besitzen vorzugsweise eine definierte axiale Vorspannung, die gewährleistet, dass die Anpressplatte 10 in Öffnungsrichtung der Reibungskupplung 3 beaufschlagt wird. Dies bedeutet, dass bei dem dargestellten Ausführungsbeispiel die Anpressplatte 10 axial in Richtung nach links von der Gegendruckscheibe 8 durch die erwähnten vorgespannten Blattfedern weggedrängt wird. Dadurch werden die Reibbeläge 7 freigegeben. Die Vorspannung der entsprechenden Federmittel, wie insbesondere Blattfedern, soll weiterhin gewährleisten, dass die Abwälzauflage 129 stets axial in Richtung der radial äußeren Bereiche der Hebelfeder 16 gedrängt wird.

Der Abstützring 20 bildet einen so genannten Verstellring 20, der über ein Rampensystem am gehäuseartigen Bauteil 12 axial abgestützt ist. Das Rampensystem besitzt in Umfangsrichtung verlaufende, sich in axialer Richtung erhebende Rampen. In bekannter Weise können entsprechende Rampen unmittelbar an dem Verstellring 20 angeformt sein und die mit diesen zusammenwirkenden Gegenrampen in vorteilhafter Weise unmittelbar im Bereich des Gehäusebodens des gehäuseartigen Bauteils 12 eingebracht sein. In Umfangsrichtung wird der Verstellring 20 von wenigstens einer nicht näher dargestellten Feder in Umfangsrichtung beziehungsweise Nachstellrichtung beaufschlagt.

Einzelheiten bezüglich der Funktionsweise einer Nachstelleinrichtung, der Ausgestaltungsmöglichkeiten für Rampen und Gegenrampen sowie der Auslegung und Anordnung von Federn, welche eine Nachstellung innerhalb eines Rampensystems ermöglichen, können aus der DE 42 39 291 A1, DE 42 39 289 A1, DE 43 22 667 A1 und DE 44 31 641 A1 entnommen werden.

Die Nachstelleinrichtung 21 umfasst weiterhin eine Sensoreinrichtung 23, die einen Sensorring 24 aufweist, der in ähnlicher Weise, wie dies in Zusammenhang mit dem Verstellring 20 beschrieben wurde, über ein Rampensystem am Gehäuseboden des gehäuseartigen Bauteils 12 abgestützt ist und in Nachstellrichtung durch eine Feder umfangsmäßig beaufschlagt wird. Der Sensorring 24 ist hier axial zwischen dem gehäuseartigen Bauteil 12 und den äußeren Bereichen der Hebelfeder 16 angeordnet, und zwar hier auf radialer Höhe der Abwälzauflage 19.

Die Sensoreinrichtung 23 besitzt weiterhin ein Sensorelement 25, das vorzugsweise axial federnde Bereiche besitzt. Das Sensorelement 25 klemmt, sofern kein Verschleiß aufgetreten ist, den Sensorring 24 axial ein, so dass dieser dann unverdrehbar gehaltert ist. Das Sensorelement 25 besitzt Anschlagbereiche 26, die mit vom Zugmittel getragenen Gegenanschlagbereichen 27 zusammenwirken können, und zwar insbesondere beim Auftreten von Verschleiß an den Reibbelägen 7. Die axiale Anordnung der Anschlagbereiche 26 und Gegenanschlagbereiche 27 sowie die zwischen diesen beim Betätigen der Reibungskupplung 3 auftretenden Axialwege sind derart aufeinander abgestimmt, dass bei einer Schließung der Reibungskupplung 3 und fehlendem Verschleiß maximal lediglich eine Berührung zwischen den Anschlagbereichen 26 und den Gegenanschlagbereichen 27 erfolgen kann. Sofern jedoch ein Verschleiß vorhanden ist, kommen die Anschlagbereiche 26 an den Gegenanschlagbereichen 27 zur Anlage bevor der vollständige Schließweg beziehungsweise Einrückweg der Reibungskupplung 3 erreicht ist. Dadurch wird bewirkt, dass in Abhängigkeit des aufgetretenen Verschleißes eine axiale Verlagerung der Anschlagbereiche 26 gegenüber zumindest dem Sensorring 24 erfolgt. Diese axiale Verlagerung bewirkt, dass der Sensorring tendenzmäßig entlastet wird und somit sich verdrehen kann um einen Winkel, der abhängig ist von dem durch das Sensorelement 25 detektierten Verschleiß. Die dabei erfolgende axiale Verlagerung des Sensorrings 24 gegenüber dem gehäuseartigen Bauteil wird durch das zwischen dem Sensorring 24 und diesem gehäuseartigen Bauteil vorgesehene Rampensystem gewährleistet.

Beim Öffnen, also Ausrücken der Reibungskupplung 3, wird die Hebelfeder 16 in eine winkelmäßige Lage zurückgedrängt, bei der die Spitzen 22 der Hebelfeder 6 eine zumindest annähernd gleich bleibende beziehungsweise konstante axiale Lage einnehmen. Aufgrund des mittels der Sensoreinrichtung 23 erfolgten Verschleißausgleichs, der hier eine entsprechende axiale Verlagerung der Abwälzauflage 19 nach rechts bewirkt, wird der Abstützring beziehungsweise Verstellring 20 beim Öffnen der Reibungskupplung 3 entlastet, so dass auch dieser dann eine Verdrehung erfährt, die aufgrund des zwischen dem gehäuseartigen Bauteil 12 und dem Verstellring 20 vorhandenen Rampensystems eine entsprechende axiale Verlagerung des Verstellrings 20 bewirkt. Bezüglich weiterer Einzelheiten beziehungsweise Funktionsmerkmale, die bei der Ausgestaltung der Reibungskupplung 3 zweckmäßig sein können, wird auf die ältere Anmeldung 10 2006 040 993.0 verwiesen.

Das die Anschlagbereiche 26 aufweisende Sensorelement kann durch ein ringförmiges Bauteil gebildet sein, das über den Umfang betrachtet einzelne, vorzugsweise gleichmäßig verteilte Befestigungen mit dem gehäuseartigen Bauteil 12 aufweist. Die zwischen diesen Befestigungen vorhandenen Bereiche des ringförmigen Sensorelements 25 tragen die Anschlagbereiche 26. Die in Umfangsrichtung zwischen den Befestigungen vorgesehenen Bereiche des Sensorelements 25 sind in axialer Richtung elastisch beziehungsweise federnd verformbar. Für manche Anwendungsfälle kann es zweckmäßig sein, wenn diese Bereiche auch einer Torsionsbeanspruchung ausgesetzt werden, die zumindest ein geringfügiges Verdrillen zumindest der seitlich der Anschlagbereiche 26 sich umfangsmäßig erstreckenden Bereiche mit geringerer radialer Breite bewirken.

Die Hebelfeder 15 der Reibungskupplung 2 ist gegenüber der Hebelfeder 16 axial auf der anderen Seite der radialen Bereiche des gehäuseartigen Bauteils 12 vorgesehen. Die Hebelfeder 16 stützt sich mit einem radial äußeren Bereich an einem Abstützring beziehungsweise Verstellring 28 ab. Der Verstellring 28 ist in ähnlicher Weise wie dies in Zusammenhang mit dem Verstellring 20 beschrieben wurde, gegenüber dem gehäuseartigen Bauteil 12 verdrehbar und an diesem über ein Rampensystem axial abgestützt. Der Verstellring 28 bildet einen Bestandteil einer Nachstelleinrichtung 29, die zwischen den radialen Bereichen des gehäuseartigen Bauteils 12 und der Hebelfeder 15 wirksam ist. Zwischen der Anpressplatte 9 und der Gegendruckscheibe 8 und/oder dem gehäuseartigen Bauteil 12 sind Drehmomentübertragungsmittel vorgesehen, die vorzugsweise durch an sich bekannte Blattfedern gebildet sind, welche axial derart vorgespannt sind, dass die Anpressplatte 9 axial gegen die Hebelfeder 15 gedrückt wird. Die axiale Gesamtkraft, welche auf die Hebelfeder 15 in Richtung nach rechts einwirkt, ist dabei derart bemessen, dass während des Betriebes des Kupplungsaggregats 1 eine axiale Verlagerung beziehungsweise Verschwenkung der Hebelfeder 16 aufgrund zumindest von Resonanzerscheinungen und/oder Axialschwingungen beziehungsweise Taumelschwingungen von zumindest einzelnen Bauteilen des Kupplungsaggregats verhindert wird. Eventuell können zusätzlich zu den Blattfederelementen weitere Energiespeicher beziehungsweise Federelemente vorgesehen werden, die auf die Anpressplatte 9 oder aber unmittelbar auf die Hebelfeder 15 einwirken.

Die Nachstelleinrichtung 29 umfasst weiterhin eine Sensoreinrichtung 30, die radial innerhalb und hier beabstandet von dem Verstellring 28 angeordnet ist. Die Sensoreinrichtung 30 umfasst einen Sensorring 31, der ähnlich wie der Sensorring 24 gegenüber dem gehäuseartigen Bauteil 12 verdrehbar und über ein Rampensystem abgestützt ist. Weiterhin besitzt die Sensoreinrichtung 30 ein Sensorelement 32, das entweder mittelbar oder unmittelbar vom gehäuseartigen Bauteil 12 getragen wird. Das Sensorelement 32 besitzt zumindest eine, vorzugsweise mehrere über den Umfang verteilte Anschlagbereiche 33, die mit Gegenanschlagbereichen 34 zumindest beim Auftreten von Verschleiß an den Reibbelägen 6 der Kupplungsscheibe 4 zusammenwirken. Die Gegenanschlagbereiche 34 können durch Elemente gebildet sein, die mit der Hebelfeder 15 verbunden sind. Besonders vorteilhaft ist es, wenn diese Gegenanschlagbereiche 34 durch einstückig mit der Hebelfeder 15 ausgebildete Zungen gebildet sind. Das Sensorelement 32 besitzt Bereiche 35, die mit axialer Vorspannung an Bereichen 36 des Sensorrings 31 zusammenwirken. Durch die axiale Vorspannung zumindest der Bereiche 35 wird der Sensorring 31 axial eingespannt, so dass eine Verdrehung desselben zumindest bei fehlendem Verschleiß an den Reibbelägen 6 vermieden wird. Dadurch wird eine unkontrollierte, nicht auf einen Verschleiß zurückzuführende Nachstellung der Nachstelleinrichtung 29 vermieden.

Das Sensorelement 32 kann ebenfalls durch ein ringförmiges Bauteil gebildet sein, das ähnlich ausgebildet mit dem gehäuseartigen Bauteil 12 verbunden und wirksam ist, wie dies in Zusammenhang mit dem Sensorselement 25 beschrieben wurde.

Der aus Figur 1 ersichtliche axiale Abstand zwischen den Anschlagbereichen 33 und den Gegenanschlagbereichen 34 ist derart bemessen, dass bei voll geschlossener Reibungskupplung 2 und fehlendem Verschleiß an den Reibbelägen 6 lediglich ein Touchieren beziehungsweise leichte Anlage zwischen diesen Bereichen 33 und 34 erfolgt, wodurch gewährleistet ist, dass der Sensorring 31 gegen Rotation blockiert bleibt. Das Schließen der Reibungskupplung 2 erfolgt in ähnlicher Weise wie dies in Verbindung mit der Reibungskupplung 3 beschrieben wurde. Es wird mittels einer Betätigungseinrichtung eine Schließkraft im Bereich der Spitzen 37 der Hebelfeder 15 eingeleitet. Diese Schließkraft wird allmählich aufgebaut, und zwar so lange, bis die auf die Anpressplatte 9 ausgeübte Axialkraft ausreicht, um das vom Motor abgegebene Drehmoment über die Kupplungsscheibe 4 an das Getriebe weiterzuleiten. Die maximale Anpresskraft kann dabei zumindest einen konstanten Wert aufweisen. Es kann jedoch auch vorteilhaft sein, in Abhängigkeit des Betriebszustandes des Motors und des dabei abgegebenen Drehmoments diese Schließkraft entsprechend anzupassen. Dies bedeutet, dass, wenn der Motor lediglich 50 % seines Nominaldrehmoments abgibt, die Anpresskraft entsprechend reduziert werden kann.

Eine ähnliche Betätigung ist auch für die Reibungskupplung 3 möglich.

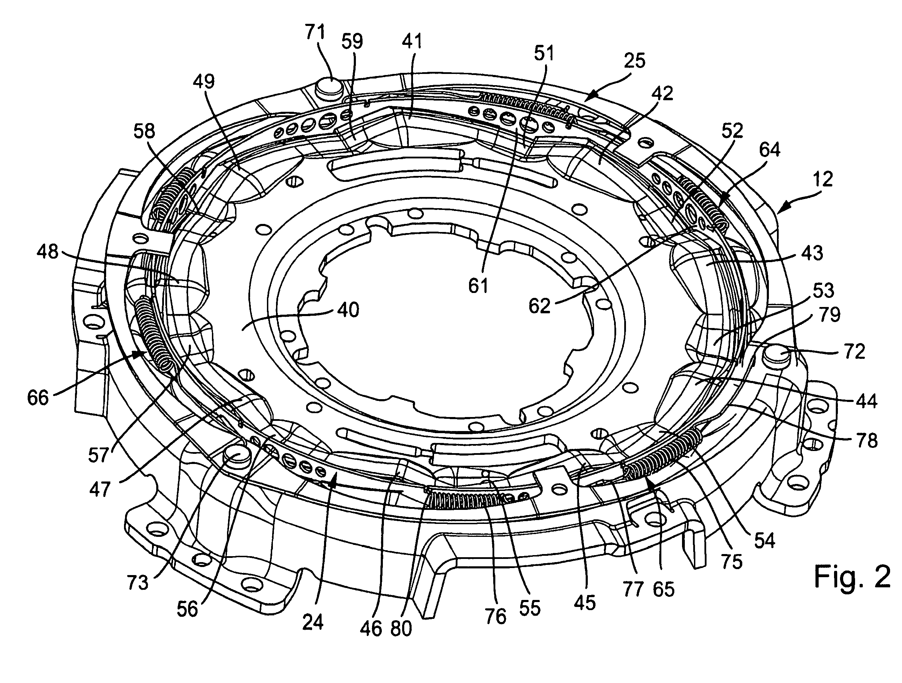

In Figur 2 ist das gehäuseartige Bauteil 12 perspektivisch zusammen mit dem Sensorring 24 dargestellt, der auch als Sensierring bezeichnet wird. Das gehäuseartige Bauteil 12 umfasst einen kreisringscheibenartigen Grundkörper 40, der acht mit Rampen versehene Erhöhungen 41 bis 48 aufweist, die auch als Rampenberge bezeichnet werden. Die Rampenberge 41 bis 48 sind auf einem Kreisumfang so angeordnet, dass sich jeweils zwischen zwei Rampenbergen 41 bis 48 ein Rampental 51 bis 59 ergibt. Die Rampen an den Rampenbergen 41 bis 48 wirken mit komplementär ausgebildeten Rampen zusammen, die an dem Sensorring 24 ausgebildet sind. Jedem Rampenteil 51 bis 59 des gehäuseartigen Bauteils 12 ist ein Rampenberg 61, 62 des Sensorrings 24 zugeordnet.

Wegen der Ausgestaltung mit den Rampen wird das gehäuseartige Bauteil 12 auch als erste Rampeneinrichtung bezeichnet. Analog wird der Sensorring 24 als zweite Rampeneinrichtung bezeichnet. Die beiden Rampeneinrichtungen 12, 24 sind mit Hilfe von drei Zugfedereinrichtungen 64 bis 66 gegeneinander verspannt.

An dem gehäuseartigen Bauteil 12 ist mit Hilfe von drei Nietelementen 71 bis 73 das Sensorelement 25 befestigt, das auch als Klemmfeder bezeichnet wird. Die Klemmfeder 25 weist drei nach innen ragende Federzungen auf, die dazu dienen, den Sensorring 24 in axialer Richtung gegen das gehäuseartige Bauteil 12 vorzuspannen. Sobald der Sensorring 24 freigegeben wird, wird über die Vorspannkraft der Zugfedereinrichtungen 64 bis 66 und die zusammenwirkenden Rampen am gehäuseartigen Bauteil 12 und am Sensorring 24 Verschleiß in axialer Richtung nachgestellt, indem der Sensorring 24 relativ zu dem gehäuseartigen Bauteil 12 verdreht wird. Im gezeigten Zustand verhindert die Klemmfeder 25 ein Nachdrehen des Sensorrings 24. Die Klemmfeder 25 wird erst angehoben, wenn Verschleiß detektiert wird.

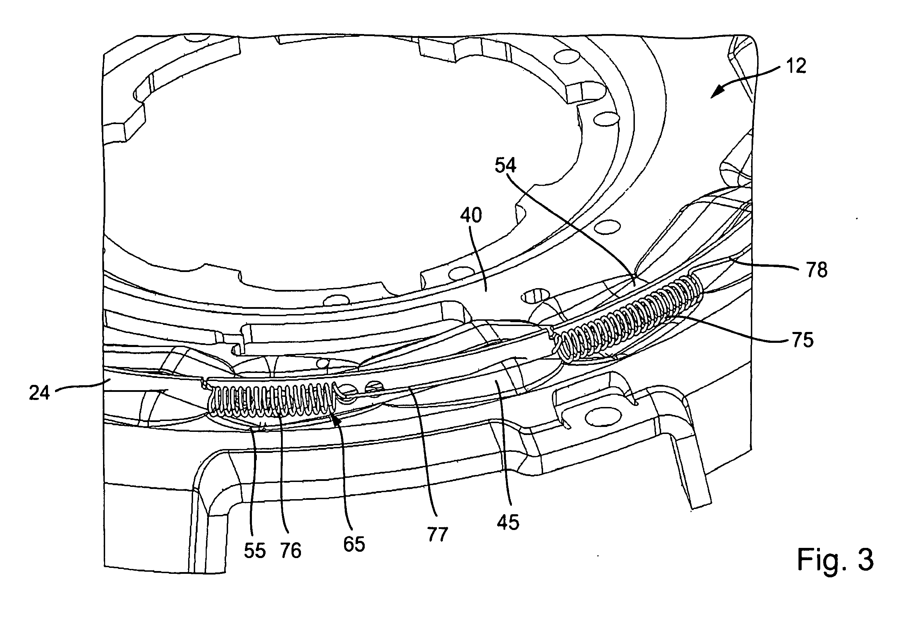

In Figur 2 und in Figur 3, in der ein Ausschnitt aus Figur 2 mit der Zugfedereinrichtung 65 vergrößert dargestellt ist, sieht man, dass die Zugfedereinrichtung 65 zwei Zugfederkörper 75, 76 umfasst, die durch einen Verbindungsdraht 77 einstückig miteinander verbunden sind. Der Verbindungsdraht 77 geht an einem Ende des Zugfederkörpers 75 in eine Federwindung über. Von dem anderen Ende des Zugfederkörpers 75 geht eine Verlängerung 78 aus. An dem freien Ende der Verlängerung 78, die aus Federdraht gebildet ist, ist ein umgebogenes Ende 79 vorgesehen, das in ein Durchgangsloch der Klemmfeder 25 eingesteckt ist, um die Zugfedereinrichtung 65 mit dem Klemmfederelement 25 zu koppeln. Das andere Ende des Verbindungsdrahts 77 geht in ein Ende des Zugfederkörpers 76 über. An dem anderen Ende des Zugfederkörpers 76 ist ein weiteres umgebogenes Ende 80 ausgebildet, das in eine Nut eingreift, die an dem Sensorring 24 vorgesehen ist. Dadurch wird die Zugfedereinrichtung 65 mit dem Sensorring 24 gekoppelt.

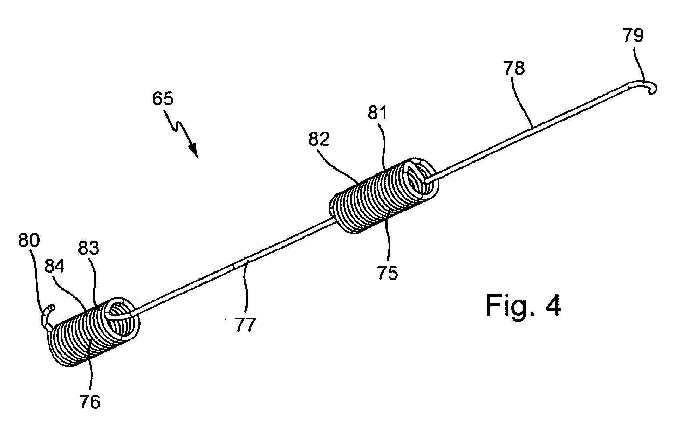

In Figur 4 ist die Zugfedereinrichtung 65 allein perspektivisch dargestellt. Durch den Verbindungsdraht 77 sind die beiden Zugfederkörper 75, 76 in Reihe geschaltet. Gemäß einem Aspekt der Erfindung sind die Federkörper 75, 76 mit einer ungleichen Anzahl von Federwindungen 81, 82; 83, 84 ausgestattet. Das liefert den Vorteil, dass die Rampengeometrie des gehäuseartigen Bauteils 12 besser ausgenutzt werden kann als bei herkömmlichen Kupplungsaggregaten. Aufgrund der ungleichen Windungszahlen der beiden Federkörper 75, 76, die sich aus der asymmetrischen Aufteilung des benötigten Gesamtfederhubs ergibt, besitzen die beiden Federkörper 75, 76 unterschiedliche Federraten. Das führt zu einer optimalen Bauraumausnutzung der Rampengeometrie des gehäuseartigen Bauteils 12 durch die Zugfedereinrichtung 65.

Bei der Auslegung der Zugfedereinrichtungen 64 bis 66 sind zunächst die Mindestkräfte aus der Tangentialbeschleunigung des Sensorrings 24 und die Kraft zur Überwindung der Reibung zwischen dem Sensorring 24 und den Rampen an dem gehäuseartigen Bauteil 12 zu bestimmen. Die größere der beiden errechneten Kräfte wird bei der Auslegung unter Einbeziehung der Herstelltoleranzen als Mindestkraft der Zugfedereinrichtungen 64 bis 66 festgelegt. Zudem ist der aufgrund des Verschleißbereichs notwendige Verdrehwinkel des Sensorrings 24 zu ermitteln. Aus dem Verdrehwinkel des Sensorrings ergibt sich in Verbindung mit dem Federwirkdurchmesser der notwendige Federhub.

Herkömmliche Federeinrichtungen bestehen aus nur einem Federkörper. Aufgrund des zum Ausgleich des Verschleiß notwendigen Verdrehwinkels des Sensorrings benötigen die Zugfedereinrichtungen sehr viel Bauraum, was zu Bauraumproblemen mit den angrenzenden Bauteilen, wie zum Beispiel der Klemmfeder 25, führen kann. Daher werden die Zugfedereinrichtungen bei herkömmlichen Kupplungsaggregaten außerhalb der Deckerampen montiert.

Durch die erfindungsgemäße Reihenschaltung von zwei Federkörpern 75, 76 ist es möglich, die Federkörper 75, 76 jeweils im Bereich eines Rampentals 54, 55 des gehäuseartigen Bauteils 12 anzuordnen. Zwischen den beiden Zugfederkörpern oder Druckfederkörpern 75, 76, also im Bereich des Verbindungsdrahts 77 ist ein Rampenberg 45 des gehäuseartigen Bauteils 12 angeordnet. Gemäß einem weiteren Aspekt der Erfindung ist die Zugfedereinrichtung oder Druckfedereinrichtung 65 radial außerhalb des Sensorrings 24 so angeordnet, dass der Sensorring 24 durch die drei über den Umfang verteilten Federeinrichtungen 64 bis 66 zentriert wird.

**Bezugszeichenliste**

| | | | |
|---|---|---|---|
| 1 | Kupplungsaggregat | 27 | Gegenanschlagbereiche |
| 2 | Reibungskupplung | 28 | Verstellring |
| 3 | Reibungskupplung | 29 | Nachstelleinrichtung |
| 4 | Kupplungsscheibe | 30 | Sensoreinrichtung |
| 5 | Kupplungsscheibe | 31 | Sensorring |
| 6 | Reibbelag | 32 | Sensorelement |
| 7 | Reibbelag | 33 | Anschlagbereiche |
| 8 | Gegendruckscheibe | 34 | Gegenanschlagbereiche |
| 9 | Anpressplatte | 35 | Bereiche |
| 10 | Anpressplatte | 38 | Bereiche |
| 11 | Antriebsplatte | 37 | Spitzen |
| 12 | gehäuseartiges Bauteil | 40 | Grundkörper |
| 13 | Hebelelement | 41 | Rampenberg |
| 14 | Hebelelement | 42 | Rampenberg |
| 15 | Hebelfeder | 43 | Rampenberg |
| 16 | Hebelfeder | 44 | Rampenberg |
| 17 | Zugmittel | 45 | Rampenberg |
| 18 | Ende | 46 | Rampenberg |
| 19 | Abwälzauflage | 47 | Rampenberg |
| 20 | Abstützring | 48 | Rampenberg |
| 21 | Nachstelleinrichtung | 51 | Rampental |
| 22 | Spitzen | 52 | Rampental |
| 23 | Sensoreinrichtung | 53 | Rampental |
| 24 | Sensorring | 54 | Rampental |
| 25 | Sensorelement | 55 | Rampental |
| 26 | Anschlagbereiche | 56 | Rampental |
| 57 | Rampental | | |
| 58 | Rampental | | |
| 59 | Rampental | | |
| 61 | Rampenberg | | |
| 62 | Rampenberg | | |
| 64 | Zugfedereinrichtung | | |
| 65 | Zugfedereinrichtung | | |
| 66 | Zugfedereinrichtung | | |
| 71 | Nietelement | | |
| 72 | Nietelement | | |
| 73 | Nietelement | | |
| 75 | Zugfederkörper | | |
| 76 | Zugfederkörper | | |
| 77 | Verbindungsdraht | | |
| 78 | Verlängerung | | |
| 79 | umgebogenes Ende | | |
| 80 | umgebogenes Ende | | |
| 81 | Federwindung | | |
| 82 | Federwindung | | |
| 83 | Federwindung | | |
| 84 | Federwindung | | |

## Patentansprüche

1. Kupplungsaggregat mit wenigstens einer Reibungskupplung (2,3), die eine Verschleißnachstelleinrichtung mit einer ersten Rampeneinrichtung (12) umfasst, die mit einer zweiten Rampeneinrichtung (24) zusammenwirkt, die durch mindestens eine Federeinrichtung, insbesondere eine Zugfedereinrichtung (64,65,66), mit der ersten Rampeneinrichtung (12) verspannt ist, wobei die Federeinrichtung (64,65,66) mindestens zwei in Reihe geschaltete Federkörper (75,76), insbesondere Zugfederkörper, umfasst, **dadurch gekennzeichnet, dass**

2. Kupplungsaggregat nach Anspruch 1, **dadurch gekennzeichnet, dass** die Federkörper (75,76) jeweils im Bereich eines Rampentals (54,55) der ersten Rampeneinrichtung (12) angeordnet sind.

3. Kupplungsaggregat nach einem der vorhergehenden Ansprüche, **dadurch gekennzeichnet, dass** die Federkörper (75,76) jeweils im Bereich eines Rampenbergs der zweiten Rampeneinrichtung (24) angeordnet sind.

4. Kupplungsaggregat nach einem der vorhergehenden Ansprüche, **dadurch gekennzeichnet, dass** zwischen zwei Federkörpern (75,76) einer Federeinrichtung (65) jeweils ein Rampenberg (45) der ersten Rampeneinrichtung (12) angeordnet ist.

5. Kupplungsaggregat nach einem der vorhergehenden Ansprüche, **dadurch gekennzeichnet, dass** die beiden Federkörper (75,76) eine ungleiche Anzahl von Federwindungen (81,82,83,84) aufweisen.

6. Kupplungsaggregat nach einem der vorhergehenden Ansprüche, **dadurch gekennzeichnet, dass** einer der Federkörper (75) mit einem freien Ende (79) in die erste Rampeneinrichtung (12) oder in ein Klemmfederelement (25) eingehängt ist, das an der ersten Rampeneinrichtung (12) befestigt ist.

7. Kupplungsaggregat nach einem der vorhergehenden Ansprüche, **dadurch gekennzeichnet, dass** einer der Federkörper (76) mit einem freien Ende (80) in die zweite Rampeneinrichtung (24) eingehängt ist.

8. Kupplungsaggregat nach einem der vorhergehenden Ansprüche, **dadurch gekennzeichnet, dass** die zweite Rampeneinrichtung (24) so radial innerhalb von mehreren Federeinrichtungen (64,65,66) angeordnet ist, dass die zweite Rampeneinrichtung (24) durch die Zugfedereinrichtungen (64,65,66) zentriert wird.

9. Kupplungsaggregat nach einem der vorhergehenden Ansprüche, **dadurch gekennzeichnet, dass** die Federkörper (75,76) jeweils eine Schraubenzugfeder umfassen.

## Claims

1. Coupling device having at least one friction clutch (2, 3) which comprises a wear adjustment device with a first ramp device (12) which interacts with a second ramp device (24) which is clamped by means of at least one spring device, in particular a tension spring device (64, 65, 66), to the first ramp device (12), wherein the spring device (64, 65, 66) comprises at least two spring bodies (75, 76) which are connected in series, in particular tension spring bodies, **characterized in that** the two spring bodies (75, 76) are integrally connected to one another by a connecting wire (77).

2. Coupling device according to Claim 1, **characterized in that** the spring bodies (75, 76) are each arranged in the region of a ramp trough (54, 55) of the first ramp device (12).

3. Coupling device according to one of the preceding claims, **characterized in that** the spring bodies (75, 76) are each arranged in the region of a ramp peak of the second ramp device (24).

4. Coupling device according to one of the preceding claims, **characterized in that** in each case a ramp peak (45) of the first ramp device (12) is arranged between two spring bodies (75, 76) of a spring device (65).

5. Coupling device according to one of the preceding claims, **characterized in that** the two spring bodies (75, 76) have an unequal number of spring turns (81, 82; 83, 84).

6. Coupling device according to one of the preceding claims, **characterized in that** one of the spring bodies (75) is engaged by one free end (79) with the first ramp device (12) or with a clamp spring element (25) which is attached to the first ramp device (12).

7. Coupling device according to one of the preceding claims, **characterized in that** one of the spring bodies (76) is engaged by one free end (80) with the second ramp device (24).

8. Coupling device according to one of the preceding claims, **characterized in that** the second ramp device (24) is arranged radially within a plurality of spring devices (64, 65, 66) in such a way that the second ramp device (24) is centred by the tension spring devices (64, 65, 66).

9. Coupling device according to one of the preceding claims, **characterized in that** the spring bodies (75, 76) each comprise a helical tension spring.

## Revendications

1. Dispositif d'embrayage comprenant au moins un embrayage à friction (2, 3), qui comporte un système de rattrapage d'usure avec un premier dispositif de rampe (12) qui coopère avec un deuxième dispositif de rampe (24), qui est attaché au premier dispositif de rampe (12) au moyen d'au moins un système de ressorts, en particulier un système de ressorts de traction (64, 65, 66), dans lequel le système de ressorts (64, 65, 66) comprend au moins deux corps de ressort (75, 76) connectés en série, en particulier des corps de ressort de traction, **caractérisé en ce que** les deux corps de ressort (75, 76) sont reliés en une seule pièce l'un à l'autre par un fil de liaison (77).

2. Dispositif d'embrayage selon la revendication 1, **caractérisé en ce que** les corps de ressort (75, 76) sont disposés respectivement dans la région d'une vallée de rampe (54, 55) du premier dispositif de rampe (12).

3. Dispositif d'embrayage selon l'une quelconque des revendications précédentes, **caractérisé en ce que** les corps de ressort (75, 76) sont disposés respectivement dans la région d'une crête de rampe du deuxième dispositif de rampe (24).

4. Dispositif d'embrayage selon l'une quelconque des revendications précédentes, **caractérisé en ce qu'**une crête de rampe (45) du premier dispositif de rampe (12) est chaque fois disposée entre deux corps de ressort (75, 76) d'un système de ressorts (65).

5. Dispositif d'embrayage selon l'une quelconque des revendications précédentes, **caractérisé en ce que** les deux corps de ressort (75, 76) présentent un nombre inégal de spires de ressort (81, 82; 83, 84).

6. Dispositif d'embrayage selon l'une quelconque des revendications précédentes, **caractérisé en ce qu'**un des corps de ressort (75) est suspendu par une extrémité libre (79) dans le premier dispositif de rampe (12) ou dans un élément de ressort de serrage (25), qui est fixé au premier dispositif de rampe (12).

7. Dispositif d'embrayage selon l'une quelconque des revendications précédentes, **caractérisé en ce qu'**un des corps de ressort (76) est suspendu par une extrémité libre (80) dans le deuxième dispositif de rampe (24).

8. Dispositif d'embrayage selon l'une quelconque des revendications précédentes, **caractérisé en ce que** le deuxième dispositif de rampe (24) est disposé radialement à l'intérieur de plusieurs systèmes de ressorts (64, 65, 66), de telle manière que le deuxième dispositif de rampe (24) soit centré par les systèmes de ressorts de traction (64, 65, 66).

9. Dispositif d'embrayage selon l'une quelconque des revendications précédentes, **caractérisé en ce que** les corps de ressort (75, 76) comprennent chaque fois un ressort de traction hélicoïdal.
